# EUROPÄISCHE PATENTANMELDUNG

(11) **EP 1 510 597 A1**
(43) Veröffentlichungstag der Anmeldung: **02.03.2005**
(21) Anmeldenummer: 03017448.6
(22) Anmeldetag: 01.08.2003
(51) Int. Cl.: C23C 22/86

(54) **Verfahren zur Aufarbeitung Chrom-(VI)-freier Passivierungslösungen für die Galvanotechnik**

(71) Anmelder: Fuhrmann, Bernd, 96242 Sonnefeld (DE)
(72) Erfinder: Fuhrmann, Bernd, 96242 Sonnefeld (DE)

(57) **Zusammenfassung**

Verfahren zur Aufarbeitung Chrom-(VI)-freier Passivierungen für die Galvanotechnik auf der Basis der lonenaustauschertechnik mit vorheriger Oxidation, wobei die Oxidation des Eisen-(II) zu Eisen-(III) in den Prozeßablauf integriert ist. Dadurch ist es möglich, in einer Verfahrensstufe die Zink- und Eisenionen simultan zu entfernen, was einen kontinuierlichen Betrieb möglich macht.

## Beschreibung

### 1. Benennung: Ferrox-Change-Verfahren

### 2. Beschreibung

Die Erfindung betrifft ein Verfahren zur Aufarbeitung Chrom-(VI)-freier Passivierungen für die Galvanotechnik. Es werden hierbei störende Zink- und Eisen-Ionen entfernt, ohne die für die chemische Reaktion nötigen Inhaltsstoffe wie Chrom-(III)- und Kobalt-lonen abzureichern.

### 3. Ziel

Um einen besseren Korrosionsschutz für galvanisch verzinkte Metallteile zu erzielen, werden diese in einem nachfolgenden Verfahrensschritt passiviert. Dazu wird das Werkstück in eine salpetersaure, metallsalzhaltige Lösung getaucht. Hier werden weitere Metallionen in die Zinkschicht eingelagert, was zu einem erhöhten Korossionsschutz führt. Gleichermaßen werden Zink- und in vielen Fällen auch Eisenionen abgelöst, die sich in der Passivierungslösung anreichern und damit deren Wirkung im Laufe der Zeit soweit herabsetzen, bis ein geforderter Korossionsschutz nicht mehr gegeben ist.
Gerade die neu entwickelten Chrom-(VI)-freien Passivierungen mit hoher Korossionsbeständigkeit reagieren hierauf äußerst empfindlich und müssen so nach kurzer Betriebszeit verworfen werden. Dies führt nicht nur zu hohen Entsorgungskosten, auch der Neuansatz dieser Lösungen ist sehr kostenaufwendig.

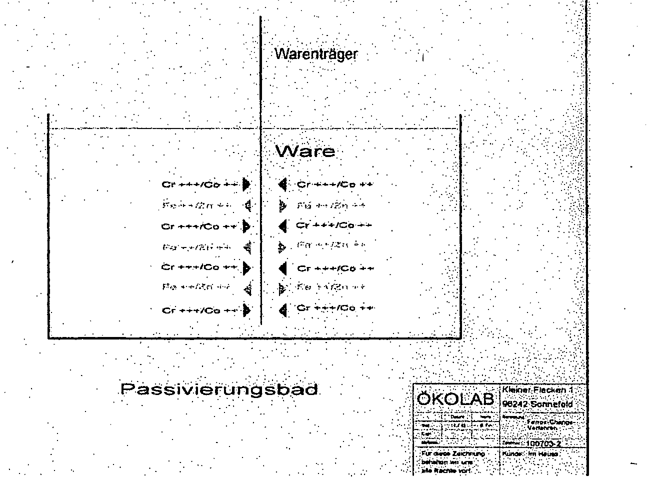

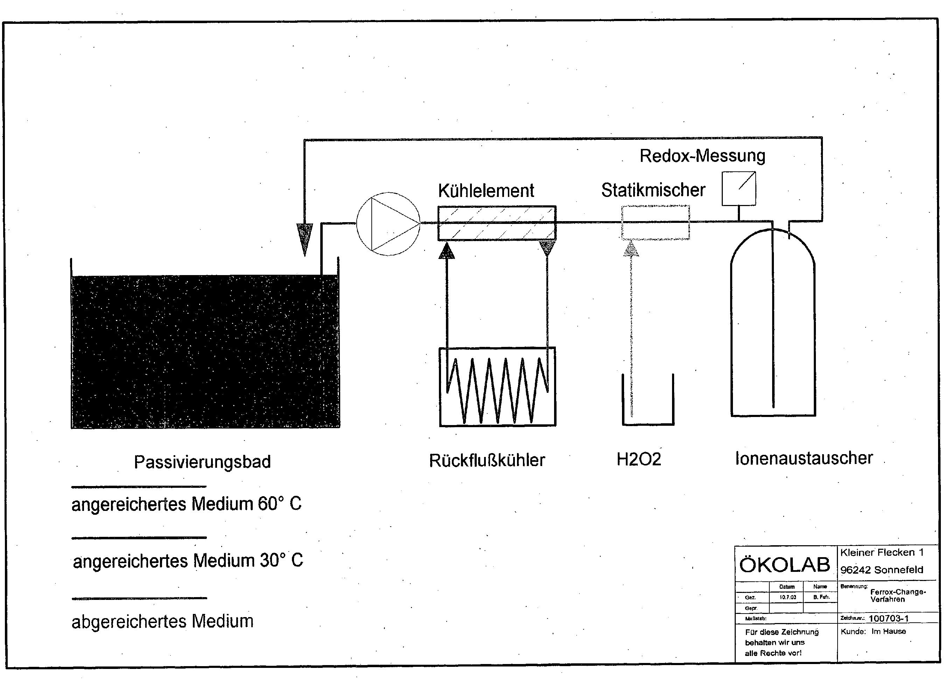

### Abb. 1 Passivierungsverfahren

Der Erfindung liegt die Aufgabe zugrunde, ein Verfahren vorzuschlagen, mit dem die Passivierungslösung soweit von störenden Zink- und Eisenionen gereinigt werden kann, daß eine Aufkonzentrierung der Lösung mit diesen Stoffen verhindert wird und eine Standzeitverlängerung erreicht werden kann, ohne Einbußen hinsichtlich des Korrosionschutzes zu erhalten.

### 4. Ausführung

Das Ferrox-Change-Verfahren unterscheidet sich von anderen Verfahren in zweifacher Hinsicht:
1. Das Verfahren arbeitet einstufig. Die Zink- und Eisenionen werden in einem Arbeitsgang selektiv aus der Passivierungslösung entfernt.
2. Das Verfahren arbeitet kontinuierlich im Bypaß. Während des Betriebs wird aus dem Bad ein bestimmter Volumenstrom der Passivierung abgezogen, von den störenden Metallionen befreit und wieder ins Bad zurückgeleitet

Ausgehend von einem Verfahren der eingangs beschriebenen Art, wird diese Aufgabe erfindungsgemäß dadurch gelöst, daß nach Oxidation des 2-wertigen Eisens, mittels selektivem Kationenaustauscher die Zink-(II)- und Eisen-(III)-lonen gegen Wasserstoffionen ausgetauscht werden. Die Oxidation des Eisens ist notwendig, da das Austauscherharz keine Affinität zum Eisen-(II) besitzt.

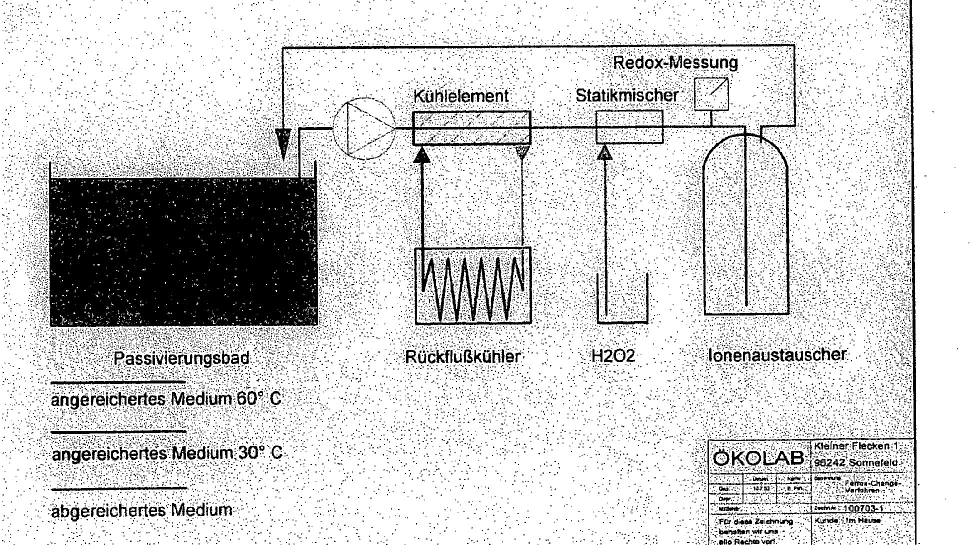

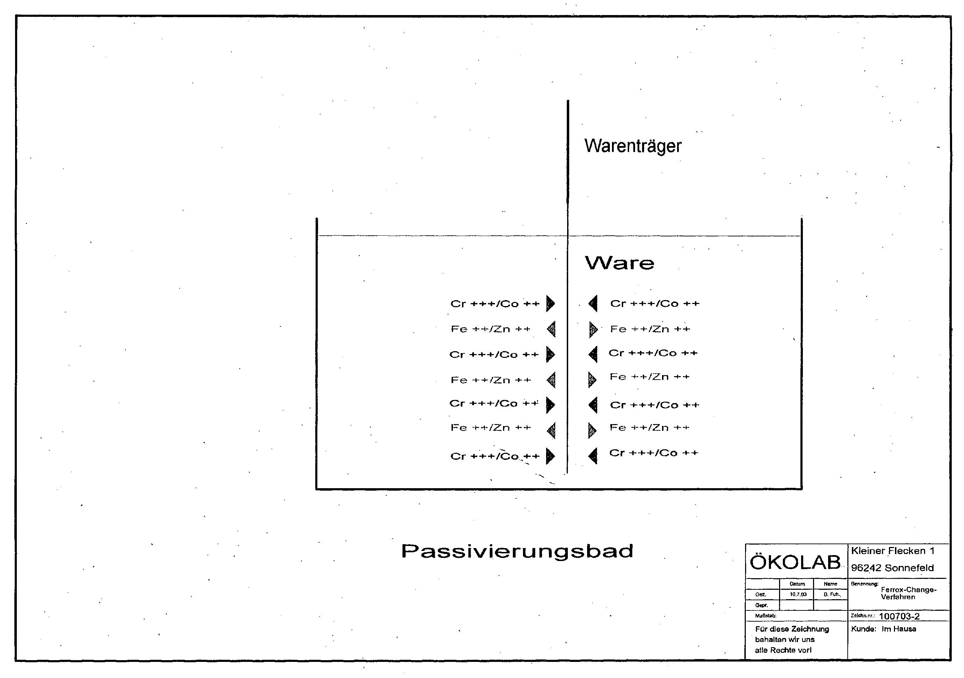

### Abb. 2 Ferrox-Change-Verfahren

Das Medium wird mittels Tauchkreiselpumpe mit einem Volumenstrom von 50 I/h einem Kühlelement zugeführt, welcher die Temperatur von 60° C auf 30° C absenkt. Dieser Schritt ist nötig, um die Struktur der Ionenaustauscherharze nicht zu zerstören. Das Kühlelement ist als Wärmetauscher ausgeführt und wird mit Kühlwasser beschickt. Das Rücklaufwasser wird einem Umlaufkühler zugeführt und dort wieder auf die benötigte Temperatur abgekühlt.

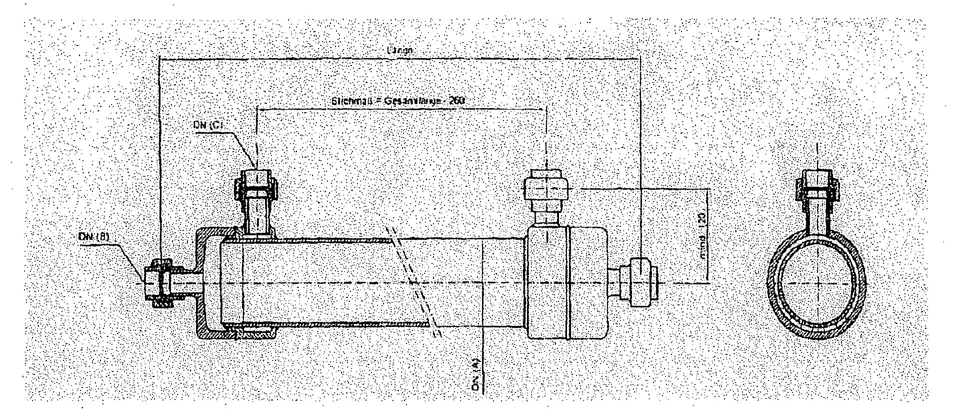

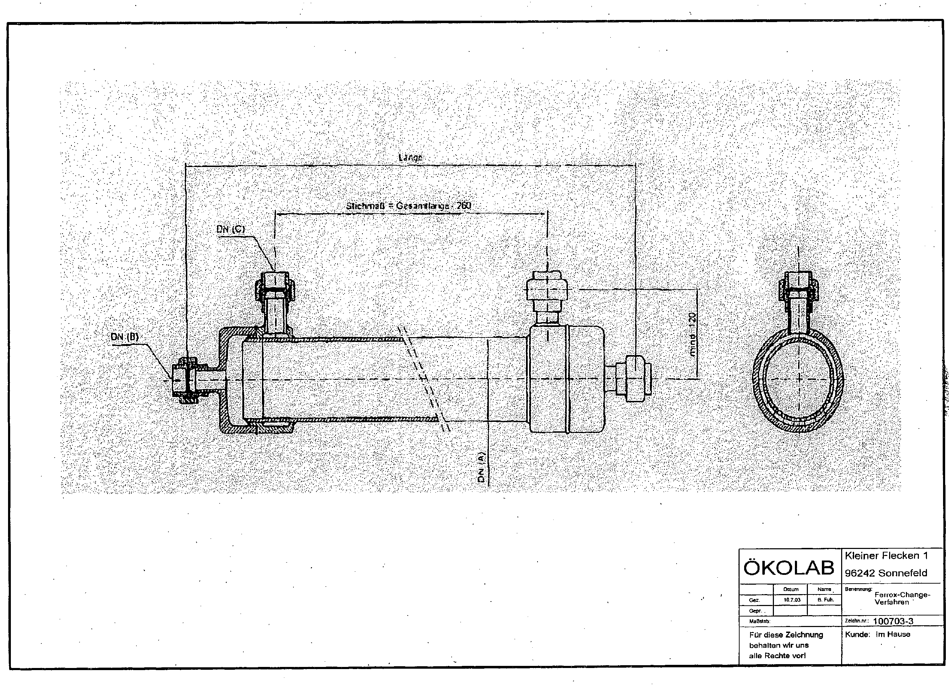

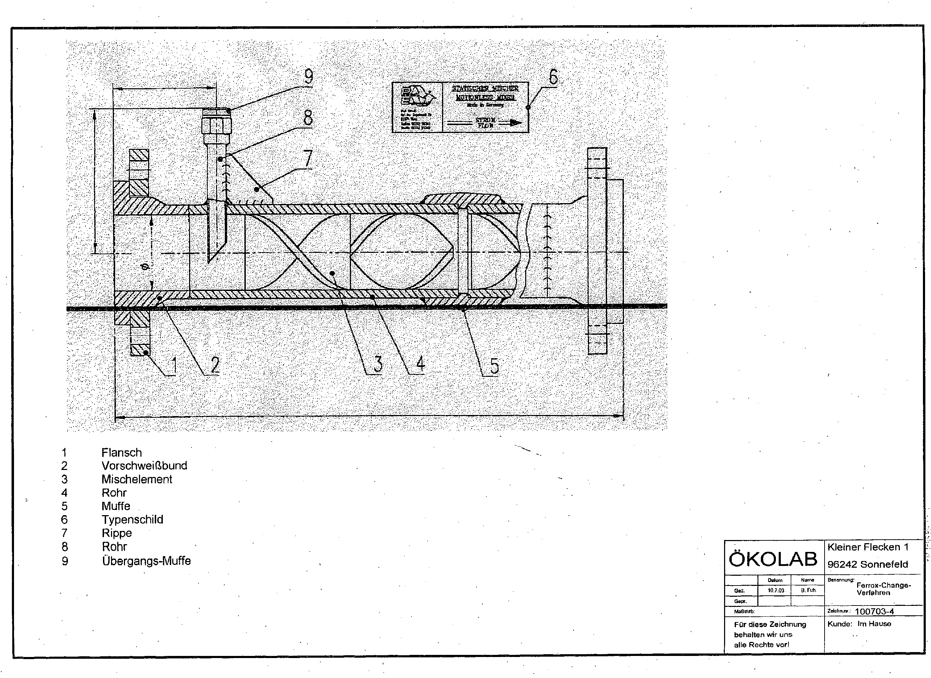

### Abb. 3 Rohrbündel-Wärmetauscher

Im weiteren Verlauf wird über einen Statischen Mischer Wasserstoffperoxid (H₂O₂) der Passivierungslösung zugemischt, womit das zweiwertige Eisen zur dreiwertigen Stufe oxidiert wird. Mittels Messung des Redox-Potentials im Ablauf der Mischeinrichtung kann die Einhaltung des erforderlichen Oxidationspotentials überwacht und zum Zwecke der Qualitätssicherung registriert werden. In vorausgehenden Versuchen wurde nachgewiesen, daß das vorliegende Chrom-(III) nicht zu Chrom-(VI) oxidiert wird, was die Anwendung des Verfahrens ausschließen würde. Die Oxidation des Eisens wurde ebenfalls analytisch nachgewiesen.

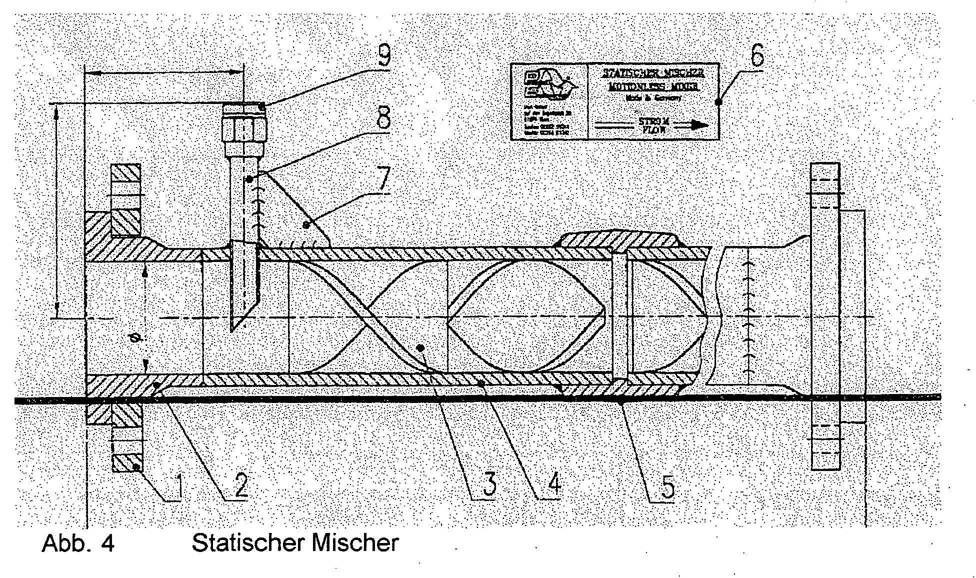

Nun wird das Medium einem Ionenaustauscher zugeschickt. Der Austauscher ist mit einem speziellen Selektivharz befüllt. Es handelt sich hierbei um ein makroporöses Copolymerisat auf der Basis von vernetztem Polystyrol, das Di-2-ethylhexyl-phosphat enthält. Die Wirksubstanz wird während des Polymerisationsprozesses in den Harzperlen eingelagert und adsorptiv festgehalten.

Die Wirksubstanz des Ionenaustauscherharzes gibt bei der Kontaktierung mit der zu reinigenden Passivierungslösung Wasserstoffionen ab und nimmt Zink-(II) und Eisen-(III)-lonen auf. Wenn in den Polystyrolgruppen nicht mehr über Wasserstoffionen verfügen ist die Austauscherkapazität des lonenaustausches erschöpft und er muß regeneriert werden.
Da der Ionenaustausch nicht mittels Leitwertmessung überwacht werden kann, muß in regelmäßigen Abständen die Konzentration des Zink vor und nach dem Austauscher ermittelt werden.
Nun wird der Ionenaustauscher gemäß Betriebsanweisung regeneriert und gespült. Die Regeneration geschieht mit 5 %iger Salpetersäure. Hierbei werden die an die Harze gebundenen Zink- und Eisenionen wieder abgelöst und ausgespült, Die Polystyrolgruppen werden wieder mit Wasserstoffionen bestückt. Diese Regenerierlösung muß einer geeigneten Abwasserbehandlung zugeführt werden. Da die Passivierung auf Salpetersäurebasis aufgebaut ist, eignet sich die Regeneration mit dieser Säure bestens, da keine weiteren Salze wie Chlorid oder Sulfat, bei einem Einsatz von Salz- bzw. Schwefelsäure, zugeführt werden. Die Wirkung der Regeneration mit dieser Säure wurde im Versuch nachgewiesen. Eine Schädigung der Harzstruktur durch die oxidative Wirkung der Salpetersäure ist bei der Konzentration von 5 % nicht zu erwarten. 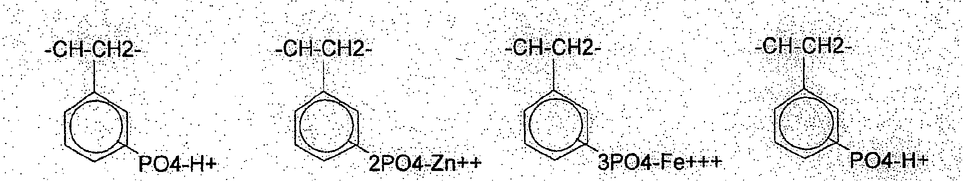 unbeladene Gruppe mit Zink beladene Gruppe mit Eisen beladene Grupperegenerierte Gruppe

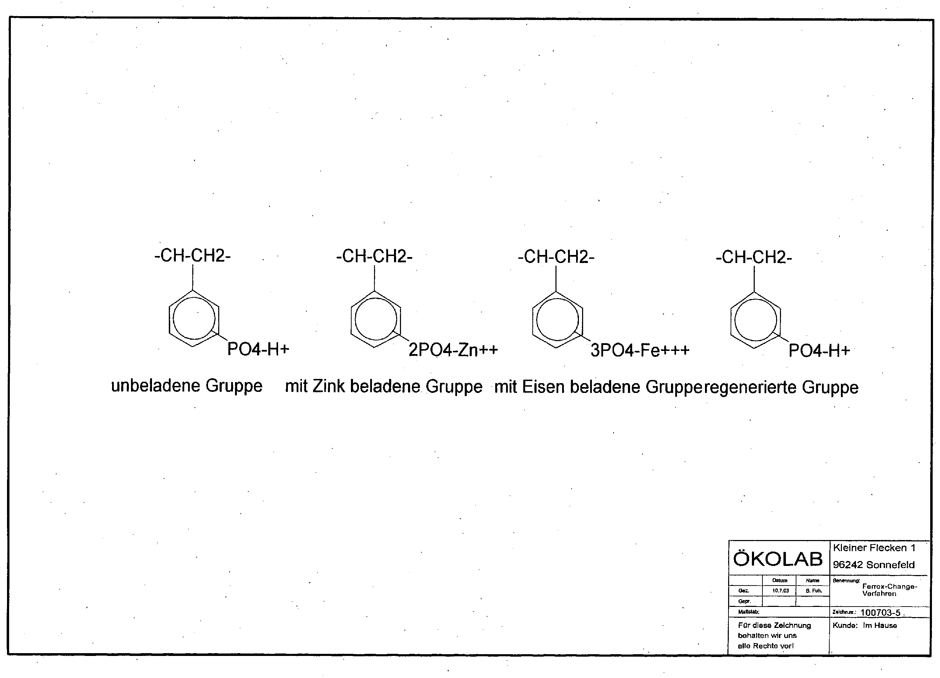

### Abb. 5 Funktionsschema des starksauren Kationenaustauschers auf Polystyrolbasis

Die so gereinigte Passivierungslösung wird nun wieder in das Prozessbad zurückgeführt und wieder auf Betriebstemperatur von 60° C erwärmt.

Das erfindungsgemäße Verfahren eignet sich daher insbesondere dazu, eine bereits beginnende Aufkonzentrierung von Eisen- und Zinkionen zu verhindern. Dadurch kann der niedrige Volumenstrom von 50 I/h realisiert werden, der den Energieaufwand für Abkühlung und Wiederaufheizen auf einem akzeptablen Niveau hält.

## Patentansprüche

1. Obwohl die Anwendung von Ionenaustauschern zur Standzeitverlängerung von Prozeßbädern in der Galvanotechnik bereits jetzt gängige Praxis ist, beruht der Anspruch der Erfindung auf ein Patent darauf, die Oxidation des Eisen-(II) zu Eisen-(III) in den Prozeßablauf zu integrieren. Erst dadurch ist es möglich, in einer Verfahrensstufe die Zinkund Eisenionen simultan zu entfernen, was einen kontinuierlichen Betrieb wie oben beschrieben erst möglich macht.
Der Patentanspruch bezieht sich somit auf ein Verfahren zur Aufarbeitung Chrom-(VI)-freier Passivierungen für die Galvanotechnik auf der Basis der lonenaustauschertechnik mit vorheriger Oxidation.
